(19) Europäisches Patentamt
European Patent Office
Office européen des brevets

(11) **EP 1 559 625 B1**

(12) **EUROPEAN PATENT SPECIFICATION**

(45) Date of publication and mention
of the grant of the patent:
**05.09.2007 Bulletin 2007/36**

(51) Int Cl.:
*B61K 9/08* *(2006.01)*     *B61K 9/12* *(2006.01)*
*B61L 23/04* *(2006.01)*     *G01M 17/10* *(2006.01)*

(21) Application number: **04425060.3**

(22) Date of filing: **02.02.2004**

(54) **Apparatus and method for detecting wheel-flats, axle bearings eccentricity and rail-track defects in a railway system**

Einrichtung und Verfahren zur Erkennung von Flachstellen bei Räder, Exzentrizitätten bei Achslagern und Schaden bei den Schienen in einem Eisenbahnsystem

Dispositif et procédé pour detecter les méplats des roues, l'excentricité des paliers des essieux et les défauts de la voie dans un système ferroviaire

(84) Designated Contracting States:
**AT BE BG CH CY CZ DE DK EE ES FI FR GB GR HU IE IT LI LU MC NL PT RO SE SI SK TR**

(43) Date of publication of application:
**03.08.2005 Bulletin 2005/31**

(73) Proprietor: **C-Sigma s.r.l.**
**23900 Lecco (IT)**

(72) Inventor: **Ghislanzoni, Luca**
**23900 Lecco (IT)**

(56) References cited:
CH-A- 668 129          DE-A- 10 020 519
DE-A- 19 827 271     DE-C- 19 835 041
US-A- 5 433 111       US-A1- 2003 231 014

# Description

The present invention describes a method and an apparatus to detect wheel flats in railway vehicles, allowing at the same time the monitoring of the evolution of axle bearings eccentricity and defects, as well as the detection of "sharp" rail track defects (excessive gaps and the like).

Several devices are commercially available which already feature similar functions, although obtained by other means.

In particular, patent DE 198 27 271 A1, Mueller Andreas & Weider Dietmar (referred here as D1), discloses a technique to correlate, in time domain, the signals from speed sensors with variations in the distance between wheel-set and rail (measured by means of suitable distance sensors). Such technique can detect rail-track defects, as well as "not round" wheels. "Not round" wheels are detected by monitoring distance variations synchronous to wheel-set revolutions (D1, column10, lines 30-37), which would reveal variations, as a function of the rotation angle, in a wheel's radius. It is further mentioned that such a "not round" wheel could also be detected by monitoring small variations (jitter) in the proportionality between the signals of two different speed sensors (as one of the two will vary, away from a nominally fixed proportionality with respect to the other, according to the instantaneous value of the corresponding wheel's rotational rate, which is, for a given vehicle's speed, inversely proportional to the value of the wheel's radius at that particular angular position), and also such variations which would be synchronous to wheel-set revolutions.

Many of the other devices belonging to the previous art rely instead on the use of vibration sensors, such as accelerometers. The output signals from such accelerometers are then processed and correlated to the wheel-set's rotational rate, with the aim to detect characteristic "signatures" on the signals, and which appears only at the occurrence of said defects. An important example of such previous art is detailed in General Electric Company's US patent n. 5,433,111 (referred here as D2).

Devices of the types described in D1 and D2, are usually of very expensive implementation, requiring that an additional apparatus, and sensors, are purchased and installed on the vehicle.

The present invention, instead, obtains similar diagnostics capabilities by introducing a novel way to process and filter the signals from conventional speed sensors normally utilised on railway vehicles. In particular, said speed signals are usually made available to the Wheel Slide Protection (WSP) Electronics (a sort of ABS for railway vehicles), which hence becomes the natural place where to implement the novel method described herein. Therefore, no accelerometers or additional devices are required, other than the already present speed sensors and WSP Electronics.

Furthermore, the apparatus can also be used in automotive and industrial machinery applications, wherever toothed wheel sensors are used to monitor an axle's revolutions. In such cases, the method described herein allows the monitoring of bearings defects and-or wear.

WSP electronics apparatuses are widely used on railway type brake equipments to prevent wheel lock conditions, which could be very damaging for the wheel-set. Their use is controlled and prescribed by international standards (UIC, International Union of Railways).

It shall be remarked that the assignee of this invention, C-Sigma srl, is a manufacturer of railway type WSP Electronics apparatuses, and plans to embed this novel feature in all its future models.

Although this invention is ideally suited for implementation in WSP electronics apparatuses, it can obviously be embodied also in other types of apparatuses, and in particular in self-contained devices. For example, the person skilled in the art can easily imagine ways to implement this method directly into a "smart" speed sensor.

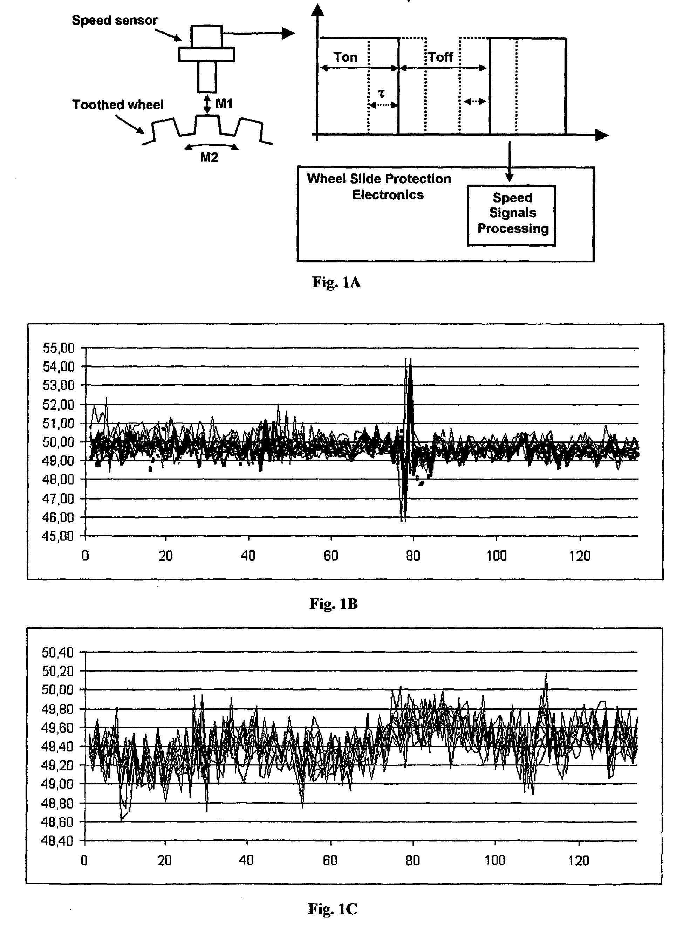

The inventive step of this invention consists in combining conventional toothed-wheel sensors with the capability to measure and record the jitter modulation on their output signals. Processing, and display by suitable means, of the recorded jitter measurements, allows then the detection of the defects described above. Figure 1A illustrates the basic principle of the invention. Speed sensors conventionally used in railway applications make use of magnetic or inductive sensing elements to detect the passage of the teeth of a ferro-magnetic toothed-wheel, which is mounted on the axle of the wheel-set. Some type of sensors generate sinusoidal output signals, some other include also amplification and zero-crossing detection circuitry (squarer circuit), as to directly generate a square wave output signal. When using a sinusoidal output type of sensor, the WSP Electronics usually includes a squarer circuit, or any other of the techniques well known to the skilled in the art, so as to allow the measurement of the frequency of the sensor's output signal. From the frequency value, it is then possible to compute the vehicle's speed, and monitor the rotational rate of each axle (typically, one WSP electronics controls 4 axles). Said $n$ the number of teeth, $d$ the wheel's diameter, and $f$ the frequency of the speed sensor's output signal, then the vehicle's speed, $V$, is related to $f$ by the following equation:

$$V = f \, \pi \, d \, / \, n \qquad (1)$$

Figure 1A depicts also the effect resulting from the onset of the following vibration or disturbance modes:

- Radial Mode M1, which results in small variations of the gap between the sensor's reading head and the toothed-wheel.

- Peripheral Mode M2, which results in small variations of the relative speed between the sensor's reading head and the toothed-wheel.
- Orthogonal Mode, along the direction orthogonal to M1 and M2, but less important because variations along this direction do not significantly modify the jitter modulation (the corresponding tooth dimension is larger that the sensor's reading head).

These vibration modes are, in turn, triggered by shocks and-or vibrations due to defects of the wheel (wheel-flats), and-or bearings, and-or rail track. Their net effect on the output signal is the presence of jitter, indicated with the greek letter tau, $\tau$, in fig. 1A.. Here, jitter is defined as a modulation of the pulse-width of the output signal. So that, by watching for example said output signal on an oscilloscope, and setting the trigger point on the rising edge, we would notice continuous small variations of the instant at which the falling edge occurs.

If we define the duty cycle as ($T = Ton + Toff$) :

$$\alpha \% = 100 * Ton / T \qquad (2)$$

and which, for an ideal square wave, is nominally 50%. The presence of vibration or disturbance modes M1 and-or M2 will result in a small modulation of $\alpha$ %.

A minimal amount of jitter is unavoidable, and it will always be present due to manufacturing tolerances, and various other sources of background noise. In a typical application said minimal modulation is usually contained within $\pm$ 1%, around a nominal value of $\alpha$ % = 50%.

Apparatuses of the previous art disregard this modulation as merely one more source of noise, being only interested in the measurement of the frequency of the speed sensor's output signal.

On the contrary, this invention does not disregard this source of noise, but it includes specific means to accurately measure its value and periodicity of occurrence, with the declared aim to obtain precious diagnostics information about defects of the wheels, bearings, rail track.

Figure 1B clearly illustrates the detection of a wheel-flat condition. The data shown correspond to recordings made on a tram vehicle, and which had a flat on the wheel-set whose speed sensor output signal was being monitored. Figure 1B is actually the super-position of 10 graphs, each graph showing the measured value of $\alpha$ % (vertical axis) for each one of the consecutive pulses counted (horizontal axis). As one pulse corresponds to one tooth, and the number of teeth was in this case **n = 134**, the horizontal axis spans from 1 to 134 counts. So, the first complete wheel revolution corresponds to graph 1, after teeth 134 has passed by the sensor's head, the $\alpha$ % value of the next pulse is assigned to graph 2, and starting again at position 1 to end at position 134, ... and so on ... till the completion of graph 10. Figure 1B contains hence the measurements of $\alpha$ % for a total of 1340 consecutive pulses (i.e.: 10 consecutive wheel's revolutions). In this way it becomes very easy to visually compare variations in $\alpha$ % , and when they occur with respect to the periodicity of a complete wheel revolution (134 teeth). This particular sequence of wheel revolutions was recorded while the vehicle was accelerating from about 2 km/h to about 10 km/h. It can be observed how the variations of $\alpha$ % are mostly contained within $\pm$ 1%, however all the 10 graphs show a large spike, up to $\pm$ 4%, at the same position on the wheel (on the graphs, between tooth 78 and 79). This spike is the characteristic "signature" of a flat wheel condition. In principle the recording of just one complete wheel revolution shall suffice to identify said characteristic "signature", however, to rule out possible spurious noise it is better to verify whether it also occurs with the same periodicity as that of a complete wheel revolution. So, it is advisable to record the measurements for at least 2 consecutive wheel revolutions (i.e.: for the case of a toothed-wheel with *n = 134,* a minimum of 268 consecutive measurements).

A defect on the rail track consisting in an excessive gap between two adjacent segments of track, would also generate a similar spike. In such case, the spike will be a one-off occurrence (hence, with no correlation to the periodicity of a wheel revolution), but appearing on the output signals of all the 4 sensors monitored by one WSP Electronics. The time intervals between the occurrence of said 4 spikes will depend on the vehicle speed, and on the distance between the 4 axles. When such a defect is detected, its location on the rail track can be reconstructed if the corresponding odometer value is recorded. At the next vehicle halt date and time are recorded, as well as the distance to the detected defect. The vehicle's journal shall then allow to reconstruct the approximate location of the defect. Alternatively, a more accurate way would record the geographical coordinates as generated by a GPS receiver module.

Figure 1C also shows the superposition of 10 graphs, corresponding to 10 consecutive wheel revolutions, but for a wheel-set with no damage. As no damage is present, no large spikes are observable. Even in this case it appears very clear that the small modulations (of $\alpha$ % ) follow a pattern with the periodicity of a complete wheel revolution. This small modulations are due to manufacturing tolerances and mounting eccentricity. By comparing the recordings carried out at various times during the service life of the vehicle (let's say for example every 100000 km), it is possible to monitor the evolution of axle bearings' defects or wear. This is a very useful feature for optimising preventive maintenance schedule.

Referring to the possibility to automatically detect characteristic "signatures" (spikes, and the like), the person skilled in the art could imagine several possible algorithms for their automatic detection. A typical example would be based on the definition of thresholds for

5 **EP 1 559 625 B1** 6

deviations from average values, their time durations, and their correlation to a wheel revolution. However, this invention is not concerned with the particular choice of detection algorithms, therefore in the following we will assume that such an algorithm can be implemented in the apparatus, although we will make no reference to particular choices. When needed, we will generically refer to said detection threshold values as to "characteristic signatures detection thresholds"

A typical apparatus embodying the invention would be composed of:

1. A conventional speed sensor with associated toothed-wheel.

2. A Speed Signals Processing circuit, easily realised by means of squarer circuits (for the measurements shown in Figures 1B and 1C, were the speed sensors themselves that already generated square output signals) feeding the CAPTURE input of a micro-controller (nowadays, most industry standard micro-controllers feature CAPTURE inputs). The CAPTURE input is used to measure the values of *Ton* and *Toff,* so as to allow the computation of $\alpha$ % . In the prototype of the new C-Sigma WSP Electronics, *Ton* and *Toff* are measured with *1 $\mu$s* resolution.

3. A section of memory in which to store said measurements $\alpha$%. In the prototype measured values are stored in RAM as the difference with respect to $\alpha$ % =50%. This allows to shrink each measurement into a single 8 bits memory location.

4. Means to display said measurements, such as a graphic display, as it is the case for the new WSP Electronics of C-Sigma. Said measurements could also be made available (in addition, or in alternative) to an interface to external devices. Indeed, the prototype also allows the choice (accessible from a menu on the front panel display of the new WSP Electronics of C-Sigma) to send said measurements to the front panel RS232 or CAN interfaces, for continuous monitoring, display, and-or recording, on external apparatuses (such as, for example, a portable PC).

Those skilled in the art will appreciate that several other useful features could be added, but which are of obvious derivation. An example is the addition of a user's choice for the speed range at which to start the recording of the $\alpha$ % measurements, or a choice for recording from the instant a button is pressed, and the like. Other examples include the addition of a modem to allow remote monitoring of the $\alpha$ % measurements, or the reception of remote SMS requests to respond with reply SMSs containing said $\alpha$ % measurements, and the like.

Indeed, also these solutions are possible with the assignee's existing WSP Electronics, which includes a plug-in board featuring a standard GSM-GPRS modem, and in addition a GPS module, useful to rely information about the location of detected rail track defects..

Furthermore, several ways can be imagined to implement algorithms, directly in the software running on the micro-controller, which could automatically recognize the characteristic "signatures" corresponding to the various defects, to then generate alarm flags and-or alarm signals of various type.

It could also turned out useful to compare measurements of complete wheel revolutions, though this time NOT consecutive, for widely different speed values. This can be obtained by waiting, without recording, an integer number of complete wheel revolutions, before starting to record again when the next required speed value is reached. Alternatively, on the toothed-wheel, one or more teeth could be machined differently from all the others, and in a way to generate values of $\alpha$ % (for example 60%) easily recognizable from the mean value. Example: among a sequence of *n-1* pulses with $\alpha$ *%=50%* suddenly appears a pulse with $\alpha$ *%=60%,* as in the sequence: 50%, 50%, 50%, 50%, ..... 50%, *60%, 40%,* 50%, 50%, 50%, ....

The position of the 60% value can then be use as a reference to allow a meaningful superposition also of graphs recorded at different dates (once every few months, once a year, etc.).

Such a trick allows to detect also the sense of rotation. In fact, by monitoring the sequence: *Ton/T, Toff/ T, Ton/T, Toff/T, Ton/T', Toff/T, .....*

With the rotation in one sense the Speed Signals Processing will at some point measure *Ton/T= 60%,* immediately followed by *Toff/T=40%.* For the rotation in the other sense the Speed

Signals Processing will *before* measure *Toff/ T=40%,* and immediately *after Ton/T=60%.*

Although Figures 1B and 1C depicts the superposition of graphs representing $\alpha$ %, it shall be obvious to those skilled in the art that other equivalent representations are of direct derivation, such as: *Toff/T, Toff/Ton, Ton/Toff,* etc.

Other effective representations consist in plotting directly the value of $\tau$, computed as the difference *Ton - <Ton>* (where *<Ton>* indicates the mean value over *n* pulses), or *Toff - <Toff>,* or *Ton - Ton(1)* (where *Ton(1)* indicates a reference value measured only once per revolution, or twice, etc.), *Toff- Toff(1),* and the like.

Indeed the number of possible ways to represents the effect of jitter is quite high, and the skilled in the art could find several reasons to prefer one way rather than another. To make the following description independent from the particular choice of jitter representation, we will collectively refer to any of the possible choices as to a generic "Jitter Parameter".

Furthermore, each representation can be analysed with reference to different types of coordinates:

- Spatial coordinates, when the chosen reference points are spatial positions, such as, for example, the teeth count used in fig. 1B and 1C.
- Time coordinates, when reference is time, and char-

4

acteristics spikes are correlated with the wheel's rotational rate.

- Frequency coordinates, when a transform (e.g.: Fourier, Z, Laplace, etc.) is applied to the recorded values, as to allow an analysis in the frequency domain, with correlations to the fundamental frequency defined by the wheel's rotational rate.

The inventive step of this invention shall be understood as independent from the particular choices of "Jitter Parameter" representation and reference coordinates, rather it consists in the idea to implement means to enable monitoring, recording, and comparisons on said "Jitter Parameter", whatever the choice for its representation.

Although the above description and examples refer to the application of the invention to the railway field, its application could be advantageous also in the automotive field, in particular for its capability to monitor defects and wear of bearings. More in general, this invention can be applied to all those applications (industrial machinery, etc.) where the combination toothed-wheel + sensor is used to monitor and/or measure rotational rates.

It shall be appreciated that those skilled in the art, building on the features of the invention described above, now could easily imagine many changes, modifications, and-or substitutions. The following claims are intended to cover all such changes as fall within the scope of the inventive step detailed in the above description.

## Claims

1. A method to detect and monitor flats on railway wheels, defects and wear of bearings, defects on rail track, using only rotational rate sensors without requiring accelerometers or other additional devices; **characterised in that** said method is arranged for

    - using conventional toothed wheel sensors to generate pulses whose frequency is proportional to the rotational speed;
    - measuring not only the frequency of said pulses but also the time duration of ON and OFF intervals for each single pulse, and with sufficient time resolution to detect jitter on said pulses;
    - processing said measurements in order to compute a "Jitter Parameter" representing the small variations in pulse width, as for example the Duty Cycle $\alpha$ % = $\mathbf{100 * Ton/T}$, which represents a very simple and computationally effective technique;
    - recording said single pulse measurements and/or computed "Jitter Parameter" for a number of pulses corresponding to a complete wheel revolution, as a minimum, but also up to any multiple of such number;
    - processing such recorded data to detect unusual values of said "Jitter Parameters" by any suitable method correlating said data to the periodicity of complete wheel revolutions;
    - allowing the comparison of data recorded at different times, such for example every year or every million km, in order to monitor the evolution of bearings wear; and
    - allowing the automatic detection of said defects, through the implementation of optimised automatic analysis algorithms, such as for example algorithms based on threshold detection of spikes or algorithms monitoring the evolution of the standard deviation of "Jitter Parameters" distribution.

2. Apparatus implementing the method described in Claim 1, comprising:

    one or more rotational rate sensors, such as conventional toothed-wheel sensors, and a microprocessor or microcontroller;

    **characterised in that**
    the rotational rate sensors are mounted and arranged for generating an output signal proportional to the vehicle's speed, and said output signal is then properly conditioned, before being made available to the microprocessor, by means of any of the standard interfacing techniques known to the skilled in the art: squaring when needed, introducing galvanic isolation when needed, level adapting when needed, and the like; said microprocessor, or microcontroller, is arranged for

    - capturing said signal from said rotational rate sensors, so as to measure the time duration of the ON and OFF intervals of the pulses of said signal;
    - computing, for each of said pulses, a representative "Jitter Parameter", such as for example the duty cycle $\alpha$ % = $100* Ton / T$ ;
    - detecting the presence of spikes by comparing the last computed value of said "Jitter Parameter" with an average value computed on a subset of all previous value, such as for example the average computed over a complete wheel revolution;
    - correlating the appearance of said spikes on the signals from more than one sensors to the vehicle's velocity and the distance between the axle's monitored, in order to detect defects on the rail-track;
    - storing said ON and OFF intervals measurements and/or "Jitter Parameter" values for each one of the pulses corresponding to a complete wheel revolution, or multiple thereof;
- providing means for downloading said recorded data to an external processing and displaying device, such as for example a portable personal computer.

3. Apparatus as claimed in Claim 2, **characterised in that**
the toothed wheel used by the rotational rate sensor is further arranged to ease the comparison of measurements recorded at different times, by means of a reference spike, artificially introduced by machining in suitable ways one or more teeth, as detailed in the description.

4. Apparatus as claimed in Claim 2, **characterised in that**
a user front panel with small keyboard and display is added to allow the user

- a real time monitoring, on said display, of said "jitter parameter";
- the selection of speed values at which to start the recording of the "jitter parameter", for a selectable number of complete wheel revolutions;
- selection of the number of complete wheel revolutions to record and/or analyse;
- selection of "characteristic signatures detection thresholds" for the automatic generation of alarms when characteristic signatures appear.

5. Apparatus as claimed in Claim 2, **characterised in that** the real time monitoring, and selection options listed in Claim 4 are further accessible via an industry standard data interface, such as for example RS232, RS485, CAN bus, MVB bus, PROFI bus, and the like.

6. Apparatus as claimed in Claim 2, **characterised in that**
a modem, such as for example the very practical GSM type, is added, and it is arranged for

- allowing remote real time monitoring of said "jitter parameter";
- allowing the logging on a Central Server of the sent data, as to allow periodic comparisons by means of a diagnostic module within the software running on said Central Server, and with the purpose to remotely detect defects and/or wear, as well as the monitoring of their evolution in time;
- allowing the remote selection of the selection options listed in Claim 2, via any one of the several suitable techniques known to the skill in the art, such as for example: SMS messages, GSM data connection, GPRS internet connection, and the like.

7. Apparatus as claimed in Claim 2, **characterised in that** a GPS receiver module is added, to allow accurate reporting on the exact location of detected rail-track defects.

8. Apparatus as claimed in Claim 2, **characterised in that** said microprocessor or microcontroller is implemented directly into the toothed wheel sensor, as to obtain a so-called "smart sensor", and it is arranged for

- allowing the real time monitoring of "jitter parameter" values on external devices, such as PCs, PDAs, User Terminals and via an industry standard interface, such as, for example: RS232, RS485, CAN bus, MVB bus, PROFI bus ; and
- allowing the selection of choices, such as those described in Claim 4, from said external devices, and via said industry standard interfaces.

9. Apparatus implementing the method described in Claim 1, **characterised in that** said method is naturally embedded into a railway type of Wheel Slide Prevention Electronics, and it is further arranged for:

- making use of the speed signals already available to the Wheel Slide Prevention Electronics; and
- exploit the data processing and handling capabilities of the Wheel Slide Prevention Electronics.

10. Apparatus implementing the method described in Claim 1, **characterised in that**
said method is naturally embedded into an automotive type of ABS Brake Controller, and it is further arranged for:

- making use of the speed signals already available to the ABS Brake Controller;
- exploiting the data processing and handling capabilities of the ABS Brake Controller;
- monitoring the standard deviation of the "Jitter Parameters" distribution's, so as to monitor, and/or detect, wear and defects of axle's bearings; and
- allowing the download of recorded data to external devices, so that maintenance technicians can compare graphs recorded at different times, in order to monitor the evolution of bearings eccentricity.

**Patentansprüche**

1. Verfahren zum Detektieren und Überwachen von Abflachungen an Eisenbahnrädern, Defekten und Abnutzung an Lagern, Defekten an Eisenbahnschienen, welches nur Drehzahlsensoren verwendet, ohne Beschleunigungsmesser oder andere zusätzliche Vorrichtungen zu benötigen;
**dadurch gekennzeichnet, dass**
das Verfahren ausgerichtet, um

- herkömmliche Zahnradsensoren zur Erzeugung von Impulsen, deren Frequenz proportional zu der Drehzahl ist, zu verwenden;
- nicht nur die Impulsfrequenz, sondern auch die Zeitdauer von EIN- und AUS-Intervallen für jeden einzelnen Impuls mit einer Zeiteinteilung, die zur Detektion von Schwankungen der Impulse ausreicht, zu messen;
- die Messungen zu verarbeiten, um einen "Schwankungsparameter" zu berechnen, welcher die geringen Variationen der Impulsbreite wiedergibt, wie beispielsweise der Einschaltzyklus $\alpha \% = 100 * Ton / T$, welcher eine sehr einfache und rechnerisch effektive Technik darstellt;
- die einzelnen Impulsmessungen und/oder die berechneten "Schwankungsparameter" für eine Impulsanzahl aufzuzeichnen, die mindestens einer vollständigen Radumdrehung entspricht, aber auch bis zu einem Vielfachen einer solchen Anzahl reichen kann;
- solche aufgezeichneten Daten aufzuzeichnen, um ungewöhnliche Werte des "Schwankungsparameters" durch jedes geeignete Verfahren zu detektieren, das die Daten zu der Periodizität vollständiger Radumdrehungen korreliert ;
- den Vergleich von zu unterschiedlichen Zeiten aufgezeichneten Daten zu ermöglichen, wie beispielsweise einmal pro Jahr oder nach jeder Million Kilometer, um die Entwicklung der Lagerabnutzung zu überwachen; und
- die automatische Detektion der Defekte durch die Implementation optimierter automatischer Analysealgorithmen zu ermöglichen, wie beispielsweise auf Schwellwerterfassung der Spitzen basierende Algorithmen oder Algorithmen, die die Entwicklung der Standardabweichung der "Schwankungsparameter"-Verteilung überwachen.

2. Vorrichtung, die das in Anspruch 1 beschriebene Verfahren implementiert, umfassend::

einen oder mehrere Drehzahlsensoren, wie herkömmliche Zahnradsensoren, und einen Mikroprozessor oder eine Mikrosteuerung;
**dadurch gekennzeichnet, dass**
die Drehzahlsensoren zur Erzeugung eines zu der Fahrzeuggeschwindigkeit proportionalen Ausgabesignals angebracht und angeordnet sind, und dass das Ausgabesignal dann entsprechend aufbereitet wird, bevor es mittels einer beliebigen der dem Fachmann bekannten Schnittstellentechniken dem Mikroprozessor verfügbar gemacht wird: bei Bedarf Quadrieren, bei Bedarf Einführen einer galvanischen Isolierung, bei Bedarf Pegelanpassung und dergleichen;
wobei der Mikroprozessor oder die Mikrosteuerung ausgerichtet ist, um:

- das Signal von den Drehzahlsensoren zu erfassen, um die Zeitdauer der EIN- und AUS-Intervalle der Impulse des Signals zu messen;
- einen repräsentativen "Schwankungsparameter" für jeden Impuls zu berechnen, wie beispielsweise der Einschaltzyklus $\square$. %, = $100 * Ton / T$ ;
- das Vorhandensein von Spitzen durch Vergleichen des zuletzt berechneten Wertes des "Schwankungsparameters" mit einem aus einer Teilmenge aller vorherigen Werte berechneten Durchschnittswert zu detektieren, wie beispielsweise einem über eine vollständige Radumdrehung berechneten Durchschnitt;
- das Auftreten der Spitzen an den Signalen von mehr als einem Sensor mit der Fahrzeuggeschwindigkeit und dem Abstand zwischen den überwachten Achsen zu korrelieren, um Defekte an der Eisenbahnschiene zu detektieren;
- die EIN- und AUS-Intervallmessungen und/oder "Schwankungsparameter"-Werte für jeden der Impulse zu speichern, die einer vollständigen Radumdrehung oder einem Vielfachen davon entsprechen;
- Mittel zum Herunterladen der aufgezeichneten Daten auf eine externe Verarbeitungs- und Anzeigeeinrichtung bereitzustellen, wie beispielsweise einem tragbaren Personal Computer.

3. Vorrichtung nach Anspruch 2, **dadurch gekennzeichnet, dass**
das von dem Drehzahlsensor verwendete Zahnrad ferner zur Vereinfachung des Vergleichs von zu unterschiedlichen Zeiten aufgezeichneten Messungen mittels einer Bezugsspitze, die durch geeignete Bearbeitung eines oder mehrerer Zähne eingeführt wird, wie in der Beschreibung ausführlich dargelegt, angeordnet ist.

4. Vorrichtung nach Anspruch 2, **dadurch gekennzeichnet, dass**
ein Nutzervorderplatte mit einer kleinen Tastatur und Anzeige zugefügt wird, um dem Nutzer Folgendes zu ermöglichen:

- eine Echtzeitüberwachung der "Schwankungsparameter" auf der Anzeige;
- die Auswahl von Geschwindigkeitswerten, bei denen die Aufzeichnung der "Schwankungsparameter" für eine wählbare Anzahl vollständiger Radumdrehungen beginnen soll;
- die Auswahl der Anzahl aufzuzeichnender und/oder zu analysierender vollständiger Radumdrehungen;
- die Auswahl "charakteristischer Signaturerfassungsschwellwerte" zur automatischen Erzeugung von Alarmmeldungen beim Auftreten der charakteristischen Signaturen.

5. Vorrichtung nach Anspruch 2, **dadurch gekennzeichnet, dass**
auf die in Anspruch 4 aufgelistete Echtzeitüberwachung und die Auswahloptionen ferner über eine Datenschnittstelle nach Industrienorm zugegriffen werden kann, wie beispielsweise RS232, RS485, CAN-Bus, MVB-Bus, PROFI-Bus und dergleichen.

6. Vorrichtung nach Anspruch 2, **dadurch gekennzeichnet, dass**
ein Modem, wie beispielsweise vom sehr praktischen GSM-Typ, zugefügt wird und ausgerichtet ist, um

- eine abgesetzte Echtzeitüberwachung der "Schwankungsparameter" zu ermöglichen;
- das Einloggen der gesendeten Daten in einen Zentralserver zu ermöglichen, um periodische Vergleiche mittels Diagnosemodulen in der auf dem Zentralserver laufenden Software zu ermöglichen, mit dem Zweck, Defekte und/oder Abnutzung zu detektieren sowie ihre Entwicklung über die Zeit zu überwachen;
- die abgesetzte Auswahl der in Anspruch 2 aufgelisteten Auswahloptionen über eine der verschiedenen dem Fachmann bekannten geeigneten Techniken, wie beispielsweise SMS-Nachrichten, GSM-Datenverbindung, GPRS-Internetverbindung und dergleichen, zu ermöglichen.

7. Vorrichtung nach Anspruch 2, **dadurch gekennzeichnet, dass**
ein GPS-Empfangsmodul zugefügt ist, um das genaue Berichten über die exakte Position der detektierten Defekte an der Eisenbahnschiene zu ermöglichen.

8. Vorrichtung nach Anspruch 2, **dadurch gekennzeichnet, dass**
der Mikroprozessor oder die Mikrosteuerung direkt in dem Zahnradsensor implementiert ist, um einen "smarten Sensor" zu erhalten und ausgerichtet ist, um

- die Echtzeitüberwachung von "Schwankungsparameter"-Werten an externen Einrichtungen, wie PC, PDA, Nutzerendgeräte und über Schnittstellen nach Industrienorm, wie beispielsweise: RS232, RS485, CAN-Bus, MVB-Bus, PROFI-Bus, zu ermöglichen; und
- die Auswahl von Wahlmöglichkeiten, wie der in Anspruch 4 beschriebenen, von den externen Einrichtungen und über die Schnittstellen nach Industrienorm zu ermöglichen.

9. Vorrichtung, die das in Anspruch 1 beschriebene Verfahren implementiert, **dadurch gekennzeichnet, dass**
das Verfahren natürlich in eine Eisenbahn-Gleitschutzelektronik eingebettet und ferner ausgerichtet ist, um:

- die von der Gleitschutzelektronik bereits verfügbaren Drehzahlsignale zu verwenden; und
- die Kapazitäten der Gleitschutzelektronik zur Verarbeitung und Handhabung von Daten auszunutzen.

10. Vorrichtung, die das in Anspruch 1 beschriebene Verfahren implementiert, **dadurch gekennzeichnet, dass**
das Verfahren natürlich in ein Kraftfahrzeug-ABS-System eingebettet und ferner ausgerichtet ist, um:

- die von dem ABS-System bereits verfügbaren Drehzahlsignale zu verwenden; und
- die Kapazitäten des ABS-Systems zur Verarbeitung und Handhabung von Daten auszunutzen;
- die Standardabweichung der Verteilung der "Schwankungsparameter" zu überwachen, um Abnutzung und Defekte an den Achslagern zu überwachen und/oder zu detektieren; und
- das Herunterladen aufgezeichneter Daten auf externe Einrichtungen zu ermöglichen, so dass Wartungstechniker zu unterschiedlichen Zeiten aufgezeichnete Kurven vergleichen können, um die Entwicklung der Lagerexzentrizität zu überwachen.

## Revendications

1. Procédé de détection et de contrôle des méplats sur les roues ferroviaires, des défauts et de l'usure de paliers, des défauts des voies ferroviaires, utilisant seulement des capteurs de vitesse de rotation sans nécessiter d'accéléromètres ni de dispositifs additionnels ;
**caractérisé en ce que**
ledit procédé est conçu pour

- utiliser des capteurs conventionnels à roue dentée pour générer des impulsions dont la fréquence est proportionnelle à la vitesse de rotation ;

- mesurer non seulement la fréquence desdites impulsions mais aussi la durée des intervalles de MARCHE et ARRET pour chaque impulsion distincte et avec une définition temporelle suffisante pour détecter le vacillement sur lesdites impulsions ;

- traiter lesdites mesures afin de calculer un « paramètre de vacillement » représentant les faibles variations de largeur d'impulsion, comme par exemple le facteur de marche $\alpha\%$ = *100\*tonne/t,* ce qui représente une technique très simple et efficace au niveau calcul ;

- enregistrer lesdites mesures d'impulsions distinctes et/ou le « paramètre de vacillement » calculé pour un nombre d'impulsions correspondant à une révolution complète des roues sous forme d'un minimum mais aussi jusqu'à tout multiple de ce nombre ;

- traiter ces données enregistrées pour détecter les valeurs inhabituelles desdits « paramètres de vacillement » par tout procédé adéquat en mettant lesdites données en corrélation avec la périodicité des révolutions complètes des roues ;

- permettre la comparaison des données enregistrées à différents moments, comme par exemple chaque année ou à chaque million de km, afin de contrôler l'évolution de l'usure des paliers ; et

- permettre la détection automatique desdits défauts grâce à la mise en oeuvre d'algorithmes d'analyse automatique optimisés, comme par exemple d'algorithmes basés sur la détection de seuils de pointes ou d'algorithmes contrôlant l'évolution de la déviation standard de la distribution des « paramètres de vacillement ».

**2.** Appareil mettant en oeuvre le procédé décrit dans la revendication 1, comprenant :

un ou plusieurs capteurs de vitesse de rotation, comme des capteurs à roue dentée conventionnels, et un microprocesseur ou microcontrôleur,

**caractérisé en ce que**
les capteurs de vitesse de rotation sont montés et conçus pour générer un signal de sortie proportionnel à la vitesse du véhicule et que ledit signal de sortie est ensuite correctement conditionné avant d'être mis à la disposition du microprocesseur, au moyen de toute technique d'interfaçage standard connue des spécialistes de la technique : quadrillage si nécessaire, introduction d'une isolation galvanique si nécessaire, adaptation de niveau si nécessaire, et similaires ;
ledit microprocesseur ou microcontrôleur est conçu pour

- capter ledit signal desdits capteurs de vitesse de rotation de manière à mesurer la durée sur les intervalles de MARCHE et ARRET des impulsions dudit signal ;

- calculer, pour chacune desdites impulsions, un « paramètre de vacillement » représentatif, comme par exemple le facteur de marche $\alpha\%$ = *100\*tonne/t ;*

- détecter la présence de pointes en comparant la dernière valeur calculée dudit « paramètre de vacillement » à une valeur moyenne calculée sur un sous-ensemble de toutes les valeurs précédentes, comme par exemple la moyenne calculée sur une révolution complète des roues ;

- mettre en corrélation l'apparition desdites pointes sur les signaux provenant de plus d'un capteur sur la vitesse du véhicule et la distance entre les essieux contrôlés afin de détecter les défauts de la voie ferroviaire ;

- sauvegarder les mesures d'intervalles de MARCHE et ARRET et/ou les valeurs de « paramètre de vacillement » pour chacune des impulsions correspondant à une révolution complète des roues ou un multiple de celles-ci ;

- fournir un moyen de téléchargement desdites données enregistrées sur un dispositif externe de traitement et d'affichage, comme par exemple un ordinateur portable personnel.

**3.** Appareil selon la revendication 2, **caractérisé en ce que**
la roue dentée utilisée par le capteur de vitesse de rotation est par ailleurs conçue pour faciliter la comparaison des mesures enregistrées à différents moments au moyen d'une pointe de référence introduite artificiellement en usinant d'une manière appropriée une ou plusieurs dents comme détaillé dans la description.

**4.** Appareil selon la revendication 2, **caractérisé en ce que**
un panneau frontal pour utilisateur équipé d'un petit clavier et d'un afficheur est ajouté pour permettre à l'utilisateur

- un contrôle en temps réel, sur ledit afficheur, dudit « paramètre de vacillement » ;

- la sélection de valeurs de vitesse au niveau desquelles il faut commencer l'enregistrement du « paramètre de vacillement » pour un nombre pouvant être sélectionné de révolution des roues ;

- la sélection du nombre de révolutions complètes des roues à enregistrer et/ou à analyser ;

- la sélection de « seuils de détection de signatures caractéristiques » pour la génération automatique d'alarmes lorsque des signatures caractéristiques apparaissent.

5. Appareil selon la revendication 2, **caractérisé en ce que**
le contrôle en temps réel et les options de sélection listés dans la revendication 4 sont en outre accessibles par une interface industrielle de données standard, comme par exemple RS232, RS485, bus CAN, bus MVB, bus PROFI et similaires.

6. Appareil selon la revendication 2, **caractérisé en ce que**
un modem, comme par exemple du type GSM très pratique, est ajouté et qu'il est conçu pour

   - permettre le contrôle en temps réel à distance dudit « paramètre de vacillement » ;
   - permettre la consignation sur un serveur central des données envoyées de manière à permettre des comparaisons périodiques au moyen d'un module de diagnostic dans le logiciel exécuté sur ledit serveur central et dans le but de détecter à distance les défauts et/ou l'usure ainsi que le contrôle de leur évolution dans le temps ;
   - permettre la sélection à distance des options de sélection listées dans la revendication 2 via l'une quelconque des plusieurs techniques appropriées connues des spécialistes de la technique, comme par exemple: les messages SMS, la connexion de données par GSM, la connexion Internet par GPRS et similaires.

7. Appareil selon la revendication 2, **caractérisé en ce que**
un module récepteur GPS est ajouté afin de permettre un compte-rendu précis de l'emplacement exact des défauts détectés sur la voie ferroviaire.

8. Appareil selon la revendication 2, **caractérisé en ce que**
ledit microprocesseur ou microcontrôleur est mis en oeuvre directement dans le capteur à roue dentée de manière à obtenir un capteur dit « intelligent » et est conçu pour

   - permettre le contrôle en temps réel des valeurs de « paramètre de vacillement » sur les dispositifs externes, comme les PC, les PDA (assistants numériques personnels), les terminaux d'utilisateurs et via une interface industrielle standard, comme par exemple : RS232, RS485, bus CAN, bus MVB, bus PROFI ; et
   - permettre la sélection de choix comme ceux décrits dans la revendication 4 depuis lesdits dispositifs externes et via lesdites interfaces industrielles standard.

9. Appareil mettant en oeuvre le procédé décrit dans la revendication 1, **caractérisé en ce que**
ledit procédé est naturellement intégré dans un type ferroviaire de système électronique de prévention de glissement de roues et est par ailleurs conçu pour

   - tirer parti des signaux de vitesse déjà à la disposition du système électronique de prévention de glissement de roues et
   - exploiter les capacités de traitement et manipulation de données du système électronique de prévention de glissement des roues.

10. Appareil mettant en oeuvre le procédé décrit dans la revendication 1, **caractérisé en ce que**
ledit procédé est naturellement intégré dans un type automobile de contrôleur de frein ABS et qu'il est par ailleurs conçu pour :

   - tirer parti des signaux de vitesse déjà à la disposition du contrôleur de frein ABS ;
   - exploiter les capacités de traitement et de manipulation de données du contrôleur de frein ABS ;
   - contrôler la déviation standard de la distribution des « paramètres de vacillement » de manière à contrôler et/ou détecter l'usure et les défauts des paliers de l'essieu ; et
   - permettre le téléchargement des données enregistrées sur des dispositifs externes afin que les techniciens de maintenance puissent comparer les graphes enregistrés à différents moments pour contrôler l'évolution de l'excentricité des paliers.

**Speed sensor**

**Toothed wheel**

M1

M2

Ton

Toff

τ

**Wheel Slide Protection Electronics**

**Speed Signals Processing**

**Fig. 1A**

**Fig. 1B**

**Fig. 1C**

**EP 1 559 625 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19827271 A1
- US 5433111 A